# EUROPÄISCHE PATENTSCHRIFT

(11) **EP 1 327 783 B1**
(45) Veröffentlichungstag und Bekanntmachung des Hinweises auf die Patenterteilung: **20.12.2006**
(21) Anmeldenummer: 02027995.6
(22) Anmeldetag: 14.12.2002
(51) Int. Cl.: F16B 7/10, A47B 9/14

(54) **Teleskopeinrichtung, insbesondere für den Möbelbau**
Telescopic assembly, especially for the furniture industry
Dispositif télescopique, en particulier pour l'industrie du meuble

(30) Priorität: 09.01.2002 DE 10201111
(43) Veröffentlichungstag der Anmeldung: 16.07.2003
(73) Patentinhaber: Moll Funktionsmöbel GmbH, 73344 Gruibingen (DE)
(72) Erfinder: Looser, Hans, 73117 Wangen (DE)
(74) Vertreter: Reimold, Otto

(56) Entgegenhaltungen:
- EP-A- 0 770 340
- DE-U1- 9 110 489
- DE-U1- 20 022 057
- US-A- 1 955 969
- US-A- 5 625 923

## Beschreibung

Die Erfindung betrifft eine Teleskopeinrichtung, insbesondere für den Möbelbau, einschließlich Stühle, mit einem äußeren Führungsteil und einem im äußeren Führungsteil in Längsrichtung verstellbar angeordneten Teleskopteil, wobei das Teleskopteil eine in Längsrichtung verlaufende Reihe von Verriegelungsmitteln aufweist, der ein am Führungsteil angeordneter, durch eine Federeinrichtung belasteter Verriegelungsbolzen zugeordnet ist, der entgegen der Kraft der Federeinrichtung in Entriegelungsrichtung aus einer in eines der Verriegelungsmittel eingreifenden Verriegelungsstellung in eine das Teleskopteil freigebende Entriegelungsstellung bewegbar ist, wie es aus der US 1955969 oder DE 9110489 bekannt ist.

Solche Teleskopeinrichtungen können beispielsweise bei Stühlen zur Verstellung des Sitzes in der Höhe oder in der Tiefe, bei Tischbeinen, Regalpfosten usw. eingesetzt werden, wenn es darum geht, zwei Bauteile des jeweiligen Gerätes oder dergleichen in ihrer Längslage relativ zueinander feststellbar verändern zu können. Dabei wird das eine Bauteil mit dem Führungsteil und das andere Bauteil mit dem Teleskopteil verbunden oder gebildet.

Die Aufgabe der Erfindung besteht darin, eine möglichst einfache Bedienung des Verriegelungsbolzens zu schaffen und für einen möglichst toleranzfreien Zusammenhalt des Führungsteils und des Teleskopteils in der jeweils mittels des Verriegelungsbolzens eingestellten Längslage zu sorgen.

Diese Aufgabe wird erfindungsgemäß dadurch gelöst, dass am Führungsteil ein Bedienhebel zum Bewegen des Verriegelungsbolzens aus der Verriegelungsstellung in die Entriegelungsstellung zwischen einer ersten Schwenkstellung und einer zweiten Schwenkstellung schwenkbar gelagert ist, der in der ersten Schwenkstellung und beim Verschwenken zwischen der ersten Schwenkstellung und einer Zwischenstellung bezüglich des Verriegelungsbolzens unwirksam und beim Verschwenken zwischen der Zwischenstellung und der zweiten Schwenkstellung bezüglich des Verriegelungsbolzens wirksam ist, und dass der Bedienhebel Spannmittel aufweist oder mit Spannmitteln verbunden ist, derart, dass das Führungsteil und das Teleskopteil in der ersten Schwenkstellung des Bedienhebels miteinander verspannt sind und die Verspannung in der zweiten Schwenkstellung des Bedienhebels aufgehoben ist.

Auf diese Weise gelangt der Verriegelungsbolzen durch Verschwenken des Bedienhebels in die eine oder andere Richtung in seine Verriegelungs- bzw. Entriegelungsstellung. Dabei erfolgt in der jeweils eingestellten Längslage, wenn der Verriegelungsbolzen mit dem betreffenden Verriegelungsmittel in Eingriff steht, gleichzeitig ein festes Verspannen des Führungsteils mit dem Teleskopteil, so dass sich ein toleranzund somit wackelfreier Zusammenhalt ergibt. Will man die relative Längslage zwischen dem Führungsteil und dem Teleskopteil verändern, muss man lediglich den Bedienhebel in seine zweite Schwenkstellung verschwenken, so dass der Verriegelungsbolzen außer Eingriff mit den Verriegelungsmitteln steht und außerdem die Verspannung aufgehoben ist, so dass sich das Teleskopteil im Führungsteil verschieben lässt.

Somit kommt dem Bedienhebel eine Doppelfunktion zu, da mit ihm sowohl der Verriegelungsbolzen als auch die Spannmittel betätigt werden.

Ein weiterer Vorteil besteht darin, dass beim Verschwenken des Bedienhebels aus der zweiten Schwenkstellung in die erste Schwenkstellung der Verriegelungsbolzen vor Erreichen der ersten Schwenkstellung und somit vor dem Verspannen freikommt und somit bereits vor dem Verspannen entweder in ein Verriegelungsmittel eingreift oder, falls er kein Verriegelungsmittel trifft, sondern zwischen zwei Verriegelungsmitteln außen am Teleskopteil zur Anlage gelangt, nach dem Verschieben des Teleskopteils mit dem nächsten Verriegelungsmittel verrastet. Dabei kann die Anordnung im Einzelnen so getroffen sein, dass das Verriegeln und das Verspannen bzw. das Entriegeln und das Entspannen nicht zeitgleich, sondern in unterschiedlichen Schwenkbereichen des Bedienhebels stattfinden.

Zweckmäßige Ausgestaltungen der Erfindung sind in den Unteransprüchen angegeben.

Ausführungsbeispiele der Erfindung werden nun anhand der Zeichnung beschrieben. Es zeigen:
- Fig. 1: eine erfindungsgemäße Teleskopeinrichtung in schematischer Seitenansicht in Teildarstellung,
- Fig. 2: die Teleskopeinrichtung nach Fig. 1 etwa im Querschnitt gemäß der Schnittlinie II-II, wobei sich der Bedienhebel in seiner ersten Schwenkstellung befindet,
- Fig. 3: die Anordnung nach Fig. 2, wobei der Bedienhebel in eine Zwischenstellung verschwenkt ist,
- Fig. 4: die Anordnung nach den Fig. 2 und 3, wobei der Bedienhebel in seine zweite Schwenkstellung verschwenkt ist,
- Fig. 5: eine ähnliche Teleskopeinrichtung mit einer variierten Federeinrichtung im den Fig. 2 bis 4 entsprechenden Querschnitt, wobei sich der Bedienhebel in seiner ersten Schwenkstellung befindet,
- Fig. 6: die Anordnung nach Fig. 5, wobei sich der Bedienhebel in seiner zweiten Schwenkstellung befindet,
- Fig. 7: wiederum eine ähnliche Teleskopeinrichtung mit einer weiteren Variante der Federeinrichtung im den Fig. 2 bis 6 entsprechenden Querschnitt, wobei sich der Bedienhebel in seiner ersten Schwenkstellung befindet,
- Fig. 8: die Anordnung nach Fig. 7 bei in die zweite Schwenkstellung verschwenktem Bedienhebel,
- Fig. 9: eine weitere Ausführungsform der Teleskopeinrichtung mit einer anderen Betätigung des Verriegelungsbolzens im den Fig. 2 bis 8 entsprechenden Querschnitt, wobei sich der Bedienhebel in seiner ersten Stellung befindet,
- Fig. 10: die Anordnung nach Fig. 9 mit in die zweite Schwenkstellung verschwenktem Bedienhebel,
- Fig. 11: ein anderes Ausführungsbeispiel der erfindungsgemäßen Teleskopeinrichtung in der Fig. 1 entsprechender Seitenansicht,
- Fig. 12: die Teleskopeinrichtung nach Fig. 11 im Querschnitt gemäß der Schnittlinie XII-XII in Fig. 11 mit in seine erste Schwenkstellung verschwenktem Bedienhebel,
- Fig. 13: die Anordnung nach Fig. 12, wobei der Bedienhebel in seine zweite Schwenkstellung verschwenkt ist,
- Fig. 14: eine Variante der Teleskopeinrichtung nach den Fig. 11 bis 13, bei der das Spannband seine Spannkraft über Druckstücke aufbringt, im den Fig. 12 und 13 entsprechenden Querschnitt, wobei der Bedienhebel in seine zweite Schwenkstellung verschwenkt ist,
- Fig. 15: eine weitere Variante der Teleskopeinrichtung in den Fig. 1 und 11 entsprechender Seitenansicht,
- Fig. 16: die Anordnung nach Fig. 15 im zur Zeichenebene der Fig. 15 parallelen Längsschnitt mit in seiner ersten Schwenkstellung befindlichem Bedienhebel,
- Fig. 17: die Anordnung nach Fig. 16 im Querschnitt gemäß der Schnittlinie XVI-XVI,
- Fig. 18: die Teleskopeinrichtung nach den Fig. 15 bis 17 im der Fig. 16 entsprechenden Längsschnitt, wobei der Bedienhebel jedoch in seine zweite Schwenkstellung verschwenkt ist,
- Fig. 19: die Anordnung nach Fig. 18 im Querschnitt gemäß der Schnittlinie XIX-XIX,
- Fig. 20: ein weiteres Ausführungsbeispiel der Teleskopeinrichtung im Querschnitt, wobei der Verriegelungsbolzen mit der zugehörigen Federeinrichtung weggelassen ist und nur die Spannmittel gezeigt sind (der Bedienhebel befindet sich in der ersten Schwenkstellung), und
- Fig. 21: die Anordnung nach Fig. 20 mit in die zweite Schwenkstellung verschwenktem Bedienhebel.

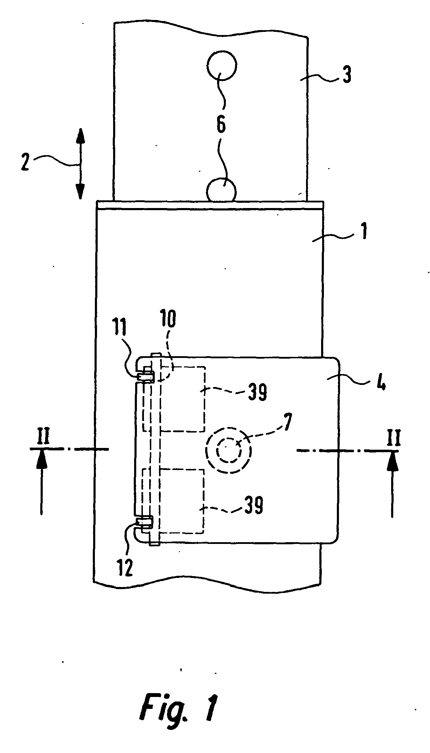

Eine insbesondere für den Möbelbau, einschließlich Stühle, gedachte Teleskopeinrichtung weist ein äußeres Führungsteil 1 und ein im Führungsteil 1 in Längsrichtung 2 verstellbar angeordnetes Teleskopteil 3 auf. Das Führungsteil 1 und das Teleskopteil 3 sind in den aus den Fig. 1, 11 und 15 hervorgehenden Seitenansichten abgeschnitten gezeigt, das heißt, sie sind in Wirklichkeit länger und in ihrer Länge an den jeweiligen Anwendungsfall angepasst. Das Führungsteil 1 und das Teleskopteil 3 können beispielsweise bei einem Stuhl eine den Sitz haltende Säule bilden, so dass der Sitz in der Höhe verstellbar ist. Die Teleskopeinrichtung könnte jedoch auch zur Sitztiefenverstellung verwendet werden. Andere Anwendungsbeispiele sind Tischbeine, Regalpfosten usw.

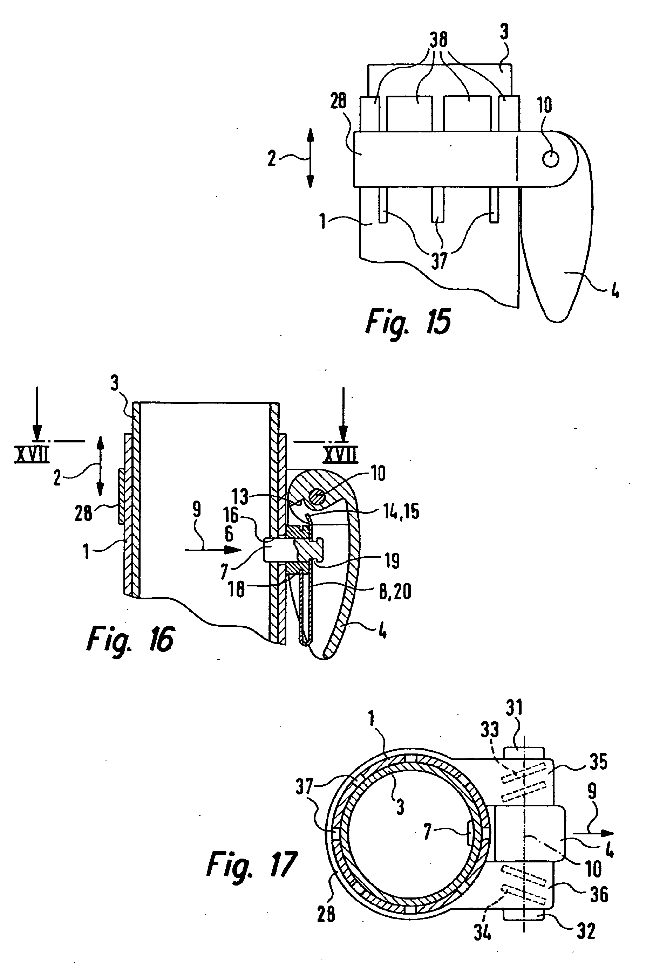

Das Führungsteil 1 und das Teleskopteil 3 weisen eine rohrförmige Gestalt mit aneinander angepassten Querschnitten auf. Dabei weist das Führungsteil 1 mit Ausnahme in den Fig. 15 bis 21 innen mindestens im Bereich eines noch zu beschreibenden Bedienhebels 4 ein seine Innenseite bildendes Innenelement 5 aus Kunststoff auf. Ansonsten bestehen das Führungsteil 1 und das Teleskopteil 3 aus Metall. Durch das Kunststoff-Innenelement 5 erhält man besonders gute Gleiteigenschaften.

Je nach der Länge des Führungsteils 1 kann das Teleskopteil 3 entweder nur einseitig oder beidseitig aus dem Führungsteil 1 ragen. Im zweitgenannten Falle bildet das Führungsteil 1 eine das Teleskopteil 3 lagernde Manschette, die anderweitig befestigt ist.

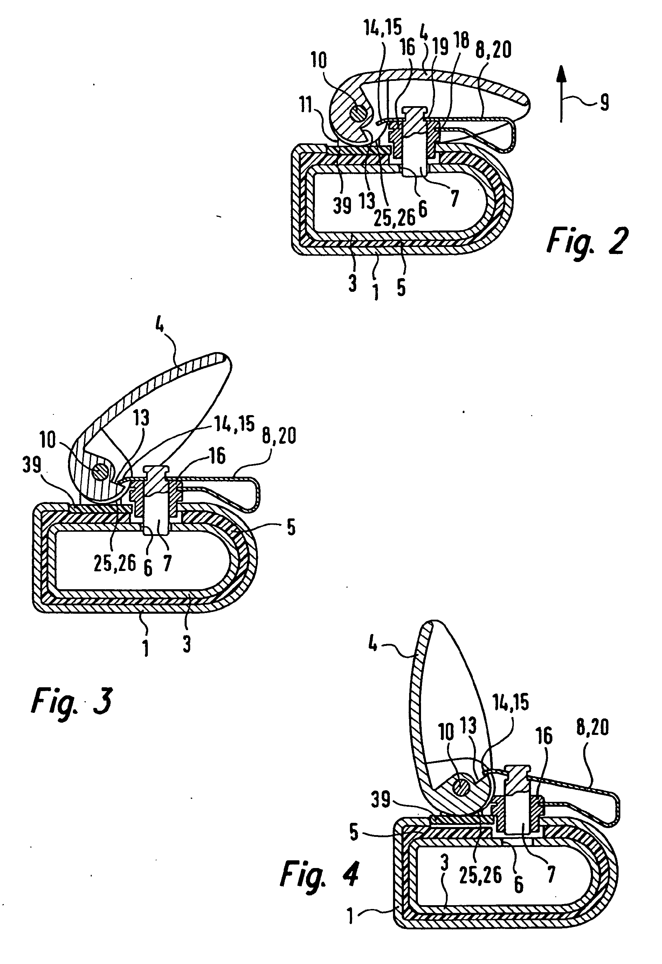

Das Teleskopteil 3 weist eine in Längsrichtung 2 verlaufende Reihe von Verriegelungsmitteln 6, beim Ausführungsbeispiel in Gestalt von Rundlöchern, auf, der ein am Führungsteil 1 angeordneter, durch eine Federeinrichtung 8 belasteter Verriegelungsbolzen 7 zugeordnet ist. Der Verriegelungsbolzen 7 ist zwischen einer in das jeweilige Verriegelungsmittel 6 eingreifenden Verriegelungsstellung (Fig. 2, 3, 5, 7, 9, 12, 16, 17 und 20) und einer Entriegelungsstellung (Fig. 4, 6, 8, 10, 13, 14, 18 und 21), in der er aus dem betreffenden Verriegelungsmittel 6 entfernt ist, so dass das Teleskopteil 3 freigegeben wird, bewegbar. Dabei wirkt die Kraft der Federeinrichtung 8 in Richtung auf die Verriegelungsstellung hin, so dass der Verriegelungsbolzen 7 in Entriegelungsrichtung 9 entgegen der Federkraft in die Entriegelungsstellung überführt wird.

Der Bedienhebel 4 dient in seiner ersten Funktion zum Bewegen des Verriegelungsbolzens 7 aus der Verriegelungsstellung in die Entriegelungsstellung. Hierzu ist der Verriegelungsbolzen 7 zwischen einer ersten Schwenkstellung und einer zweiten Schwenkstellung um eine Schwenkachse 10 schwenkbar am Führungsteil 1 gelagert. Bei der ersten und der zweiten Schwenkstellung des Bedienhebels 4 handelt es sich um Endstellungen.

In der ersten Schwenkstellung (Fig. 2, 5, 7, 9, 12, 16, 17 und 20) greift der Verriegelungsbolzen 7 in das jeweilige Verriegelungsmittel 6 ein. Der Bedienhebel 4 ist in dieser ersten Schwenkstellung sowie im Winkelbereich zwischen dieser ersten Schwenkstellung und einer Zwischenstellung (Fig. 3) bezüglich des Verriegelungsbolzens 7 jedoch unwirksam. Erst wenn der Bedienhebel 4 weiter als die Zwischenstellung zur zweiten Schwenkstellung hin verschwenkt wird, wird er bezüglich des Verriegelungsbolzens 7 wirksam, so dass dieser entgegen der Kraft der Federeinrichtung 8 aus dem jeweiligen Verriegelungsmittel 6 ausgehoben wird. Zweckmäßigerweise ist der Bedienhebel 4 in der ersten Schwenkstellung, wenn das Führungsteil 1 und das Teleskopteil 3 miteinander verriegelt sind, gegen das Führungsteil 1 geschwenkt, so dass er zum Überführen in seine zweite Schwenkstellung vom Führungsteil 1 weggeschwenkt ist. Dabei ist die Anordnung zweckmäßigerweise so getroffen, dass der Bedienhebel 4 in seiner ersten Schwenkstellung den Verriegelungsbolzen 7 überdeckt.

Der Bedienhebel 4 ist handgriffartig ausgebildet, so dass er sich flächig über den Verriegelungsbolzen 7 legt.

Die Schwenkachse 10 des Bedienhebels 4 kann je nach der weiteren Ausgestaltung der Teleskopeinrichtung parallel (Fig. 1 bis 14, 20 und 21) zur Längsrichtung 2 des Führungsteils 1 und des Teleskopteils 3 oder quer (Fig. 15 bis 19) zur Längsrichtung 2 verlaufen.

Die Schwenkachse 10 und somit der Bedienhebel 4 können von außen am Führungsteil 1 abstehenden Lagerlaschen 11, 12 (diese Bezugsziffern sind nur in den Fig. 1 und 2 angegeben) gehalten werden, so dass der Bedienhebel 4 über die Lagerlaschen 11, 12 mit dem Führungsteil 1 verbunden ist.

Am Bedienhebel 4 ist eine in Richtung quer zur Schwenkachse 10 vorstehende Betätigungspartie 13 angeordnet, in deren Schwenkweg beim Verschwenken des Bedienhebels 4 Mitnahmemittel 14 angeordnet sind, die mit dem Verriegelungsbolzen 7 in Entriegelungsrichtung in Mitnahmeverbindung stehen. In der ersten Schwenkstellung des Bedienhebels 4 befindet sich die Betätigungspartie 13 im Abstand zum Mitnahmemittel 14. Erst wenn der Bedienhebel 4 bei seinem Verschwenken in die zweite Schwenkstellung die Zwischenstellung gemäß Fig. 3 erreicht hat, gelangt die Betätigungspartie 13 zur Anlage an das Mitnahmemittel 14. Beim weiteren Verschwenken des Bedienhebels 4 in die zweite Schwenkstellung nimmt die Betätigungspartie 13 das Mitnahmemittel 14 mit, so dass sich dieses und mit ihm der Verriegelungsbolzen 7 in Entriegelungsrichtung 9 bewegt.

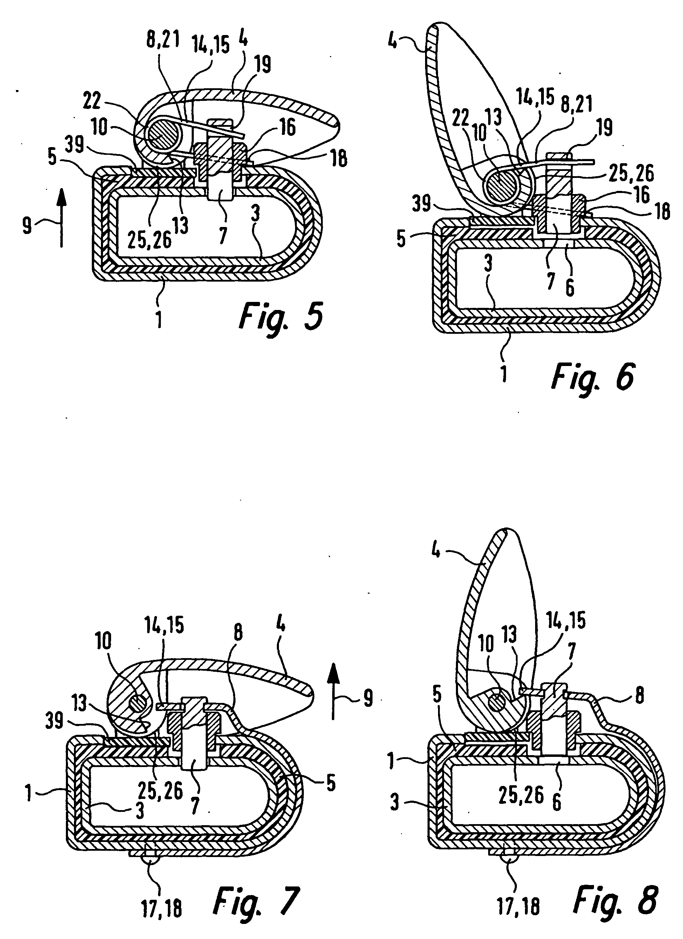

Bei den Ausführungsbeispielen nach den Fig. 2 bis 8 und 12 bis 18 werden die Mitnahmemittel 14 von der Federeinrichtung 8 gebildet, die hierzu eine im Schwenkweg der Betätigungspartie 13 des Bedienhebels 4 angeordnete Mitnahmepartie 15 bildet. Dabei ist die Federeinrichtung 8 mit dem Verriegelungsbolzen 7 so verbunden, dass er mittels der Federeinrichtung 8 in seine Entriegelungsstellung verstellt wird. Dabei ist die Anordnung so getroffen, dass die Federeinrichtung 8 einerseits mit dem Führungsteil 1 und andererseits mit dem Verriegelungsbolzen 7 verbunden ist. Wie aus der Zeichnung ersichtlich ist, ist die Federeinrichtung 8 am Verriegelungsbolzen 7 in geeigneter Weise durch Einhängen oder Verhaken mit Spiel befestigt. Die Befestigung der Federeinrichtung 8 am Führungsteil 1 kann beispielsweise an einem an diesem sitzenden Lagerteil 16 (Fig. 2 bis 6, 12 bis 14, 16 und 18) erfolgen. Im Falle der Fig. 7 und 8 ist die von einem Federband gebildete Federeinrichtung 8 jedoch unmittelbar an der Außenseite des Führungsteils 1 befestigt, beim Ausführungsbeispiel angeschraubt (Befestigungsschraube 17). Dieses Federband ist im dargestellten Falle ein Stück weit der Außenseite des Führungsteils 1 entlang geführt.

Bei den Varianten nach den Fig. 2 bis 4, 7, 8, 12 bis 14, 16 und 18) befindet sich die Mitnahmepartie 15, ausgehend von der Verbindungsstelle 18, an der die Federeinrichtung 8 mit dem Führungsteil 1 verbunden ist, jenseits des Verriegelungsbolzens 7 und wird von dem betreffenden Feder-Endbereich gebildet. Bei der Ausführungsform nach den Fig. 5 und 6 befindet sich die Mitnahmepartie 15 dagegen zwischen der Verbindungsstelle 18 und der Verbindungsstelle 19, an der die Federeinrichtung 8 mit dem Verriegelungsbolzen 7 verbunden ist.

Die Federeinrichtung 8 gemäß den Fig. 2 bis 4, 12 bis 14, 16 und 18 wird von einer Bügelfeder 20 mit U- oder V-ähnlicher Gestalt gebildet. Diese Bügelfeder 20 kann aus Blattfedermaterial, jedoch auch aus Drahtmaterial, bestehen. Die Bügelfeder 20 erstreckt sich quer zur Schwenkachse 10, wobei sie mit Ausnahme der Mitnahmepartie 15 von der Schwenkachse 10 aus gesehen jenseits des Verriegelungsbolzens 7 angeordnet ist.

Die Federeinrichtung 8 kann auch von einer Schenkelfeder 21 aus Drahtmaterial mit schraubenartig gewickeltem, von der Schwenkachse 10 des Bedienhebels 4 durchgriffenem Federkern 22 gebildet werden (Fig. 5 und 6). Die Schenkelfeder 21 ist also mit ihrem Federkern 22 auf die Schwenkachse 10 aufgesteckt und erstreckt sich mit ihren Federschenkeln zum Verriegelungsbolzen 7 bzw. zum Führungsteil 1 (im dargestellten Falle zum Lagerteil 16).

In jedem Falle ist es zweckmäßig, dass die Bügelfeder 20 oder die Schenkelfeder 21 im Bereich des Verriegelungsbolzens 7 am Führungsteil 1 festgelegt ist.

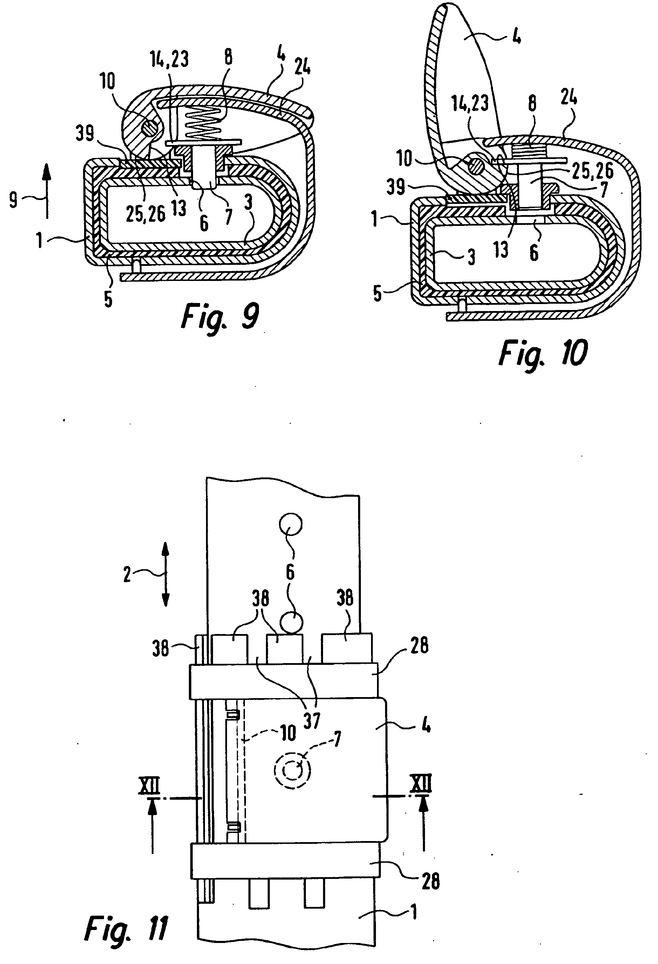

Die Mitnahme des Verriegelungsbolzens 7 in Entriegelungsrichtung 9 muss nicht über die Federeinrichtung 8 erfolgen. Die Mitnahmemittel 14 können vielmehr auch am Verriegelungsbolzen 7 angeordnet sein, wie es bei der Ausführungsform nach den Fig. 9 und 10 der Fall ist. Die Mitnahmemittel 14 werden hier von einem seitlich vom Verriegelungsbolzen 7 abstehenden Mitnahmevorsprung 13 gebildet. Die Federeinrichtung 8 ist bei dieser Variante abseits der Betätigungspartie 13 des Bedienhebels 4 angeordnet und wird im dargestellten Falle von einer Schraubenfeder gebildet, die sich einerseits am Verriegelungsbolzen 7 und andererseits an einem den Verriegelungsbolzen 7 übergreifenden, am Führungsteil 1 befestigten Abstützteil 24 abstützt.

Nachzutragen ist noch, dass bei den dargestellten Ausführungsbeispielen die Betätigungspartie 13 des Bedienhebels 4 von einem an diesem ausgebildeten Absatz gebildet wird.

Wie geschildert beginnt das Entriegeln erst dann, wenn der Bedienhebel 4 bei seinem Bewegen in die zweite Schwenkstellung die Zwischenstellung nach Fig. 3 erreicht hat. Dementsprechend kommen die Mitnahmemittel 14 beim Verschwenken des Bedienhebels 4 aus der zweiten Schwenkstellung in die erste Schwenkstellung beim Erreichen der Zwischenstellung nach Fig. 3 von der Betätigungspartie 13 des Bedienhebels 4 frei. Der Verriegelungsbolzen 7 ist dann bereits in das jeweilige Verriegelungsmittel 6 eingetreten, falls ihm dieses in der eingestellten Längslage zwischen Führungsteil 1 und Teleskopteil 3 fluchtend gegenüberliegt. Sollte sich das Teleskopteil 3 jedoch in einer solchen Längslage zum Führungsteil 1 befinden, dass der Verriegelungsbolzen 7 nicht auf ein Verriegelungsmittel 6, sondern auf die Außenseite des Teleskopteils 3 zwischen zwei Verriegelungsmitteln 6 trifft, bleibt er, schon bevor der Bedienhebel 4 seine Zwischenstellung gemäß Fig. 3 erreicht hat, auf der Außenseite des Teleskopteils 3 stehen. Der Verriegelungsbolzen 7 nimmt dann sozusagen eine Bereitschaftsstellung ein und schnappt beim Verschieben des Teleskopteils 3 von selbst in das nächste Verriegelungsmittel 6 am Teleskopteil 3.

Dem Bedienhebel 4 kommt noch eine weitere Funktion zu, da über ihn das Führungsteil 1 und das Teleskopteil 3 miteinander verspannt werden, wenn der Bedienhebel 4 in seine erste Schwenkstellung verschwenkt ist. Auf diese Weise sind das Führungsteil 1 und das Teleskopteil 3 in ihrer miteinander verriegelten Längslage außerdem fest miteinander verspannt. Auf diese Weise wird ein Wackeln des Führungsteils 1 und des Teleskopteils 3 relativ zueinander vermieden. Beim Verschwenken des Bedienhebels 4 in die zweite Schwenkstellung wird die Verspannung dagegen aufgehoben, so dass sich das Teleskopteil 3, nachdem der Verriegelungsbolzen aus ihm ausgetreten ist, verschieben lässt.

Um diese Funktion zu erfüllen, weist der Bedienhebel 4 Spannmittel auf oder ist mit Spannmitteln verbunden. Dies wird nachstehend im Einzelnen erläutert:

Bei den Ausführungsbeispielen nach den Fig. 1 bis 10 ist am Bedienhebel 4 eine zur Schwenkachse 10 exzentrische Kurvenfläche 25 vorhanden, die eine Spannfläche 26 bildet, die beim Verschwenken des Bedienhebels 4 in die erste Schwenkstellung wirksam wird und das Führungsteil 1 mit dem Teleskopteil 3 verspannt.

Bei den anderen Ausführungsformen erfolgt das Verspannen dagegen mit Hilfe eines Spannbandes 28.

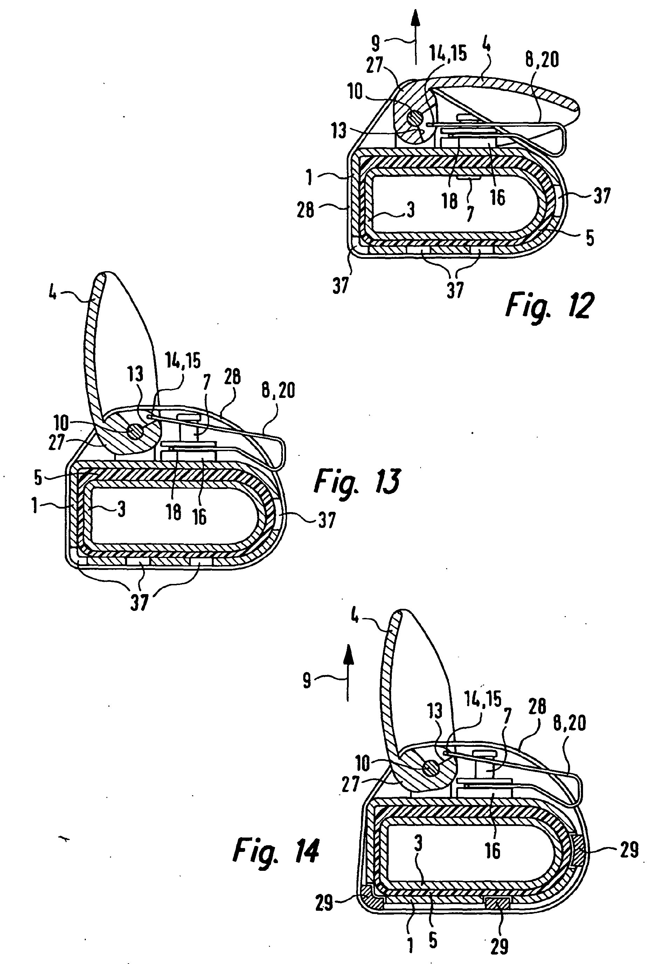

Dabei ist bei den Varianten nach den Fig. 11 bis 14 am Bedienhebel 4 ein auf der Schwenkachse 10 gelagertes Nockenelement 27 angeordnet. Das Spannband 28 ist umlaufend um das Führungsteil 1 und das Nockenelement 27 geführt. Das Nockenelement 27 ist so orientiert, dass das Spannband in der ersten Schwenkstellung des Bedienhebels 4 gespannt und in der zweiten Schwenkstellung entspannt ist.

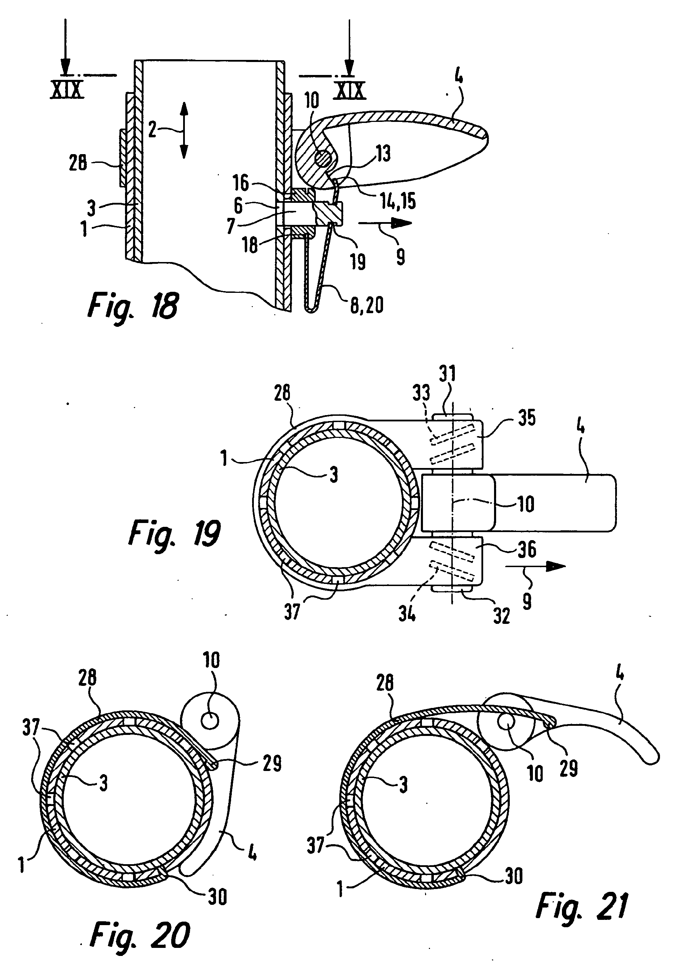

Bei dem Ausführungsbeispiel nach den Fig. 20 und 21 ist das Spannband 28 exzentrisch zur Schwenkachse 10 am Bedienhebel befestigt (Befestigungsstelle 29). Das Spannband 28 umschließt das Führungsteil 1 mindestens zum Teil und ist mit seinem der Befestigungsstelle 29 entgegengesetzten Ende 30 am Führungsteil 1 festgelegt. Verschwenkt man den Bedienhebel 4 aus seiner zweiten Schwenkstellung (Fig. 21) in seine erste Schwenkstellung (Fig. 20), wird das Spannband 28 auf Grund der Exzentrizität der Befestigungsstelle 29 um das Führungsteil 1 gezogen, so dass das Führungsteil 1 und das Teleskopteil 3 miteinander verspannt werden.

Bei der Vorrichtung nach den Fig. 15 bis 19 weist der Bedienhebel 4 zwei beiderseits von ihm abstehende, koaxial zur Schwenkachse 10 angeordnete und drehfest mit dem Bedienhebel 4 verbundene Gewindebolzen 31, 32 mit gegensinnigen Gewinden 33, 34 auf, die jeweils mit einem Gewinde-Endstück 35 bzw. 36 des das Führungsteil 1 umschließenden Spannbandes 28 in Gewindeeingriff stehen. Auf Grund der gegensinnigen Gewinde 33, 34 der Gewindebolzen 31, 32 wird das Spannband 28 je nach Schwenkrichtung des Bedienhebels 4 fest um das Führungsteil 1 gespannt oder entspannt.

Bei den Spannbandlösungen nach den Fig. 11 bis 21 weist das Führungsteil 1 im Bereich des Spannbandes 28 Längsschlitze 37 auf, so dass sich die zwischen den Längsschlitzen vorhandenen Führungsteilbereiche 38 ohne zu großen Kraftaufwand gegen das Teleskopteil 3 spannen lassen.

Schließlich kann noch vorgesehen sein, dass am Führungsteil 1 mindestens ein Druckstück 39 in Richtung zum Teleskopteil 3 hin bewegbar gelagert ist, gegen das die Spannfläche 26 bzw. das Spannband 28 wirkt. Dabei weist in diesen Fällen das Führungsteil 1 das aus Kunststoff bestehende Innenelement 5 auf, durch das das mindestens eine Druckstück 39 vom Teleskopteil 3 getrennt ist. Daher drückt das jeweilige Druckstück 39 das Innenelement 5, das sich auf Grund seiner Verformungseigenschaften verhältnismäßig leicht verformen lässt, nach innen gegen das Teleskopteil 3.

Die geschilderten Spannmittel sind bei den Ausführungsformen nach den Fig. 1 bis 14 in Richtung der Schwenkachse 10 hintereinander doppelt vorhanden, wie aus den Fig. 1 und 11 ersichtlich ist.

## Patentansprüche

1. Teleskopeinrichtung, insbesondere für den Möbelbau, einschließlich Stühle, mit einem äußeren Führungsteil und einem im äußeren Führungsteil in Längsrichtung verstellbar angeordneten Teleskopteil, wobei das Teleskopteil eine in Längsrichtung verlaufende Reihe von Verriegelungsmitteln aufweist, der ein am Führungsteil angeordneter, durch eine Federeinrichtung belasteter Verriegelungsbolzen zugeordnet ist, der entgegen der Kraft der Federeinrichtung in Entriegelungsrichtung aus einer in eines der Verriegelungsmittel eingreifenden Verriegelungsstellung in eine das Teleskopteil freigebende Entriegelungsstellung bewegbar ist, **dadurch gekennzeichnet, dass** am Führungsteil (1) ein Bedienhebel (4) zum Bewegen des Verriegelungsbolzens (7) aus der Verriegelungsstellung in die Entriegelungsstellung zwischen einer ersten Schwenkstellung und einer zweiten Schwenkstellung schwenkbar gelagert ist, der in der ersten Schwenkstellung und beim Verschwenken zwischen der ersten Schwenkstellung und einer Zwischenstellung bezüglich des Verriegelungsbolzens (7) unwirksam und beim Verschwenken zwischen der Zwischenstellung und der zweiten Schwenkstellung bezüglich des Verriegelungsbolzens (7) wirksam ist, und dass der Bedienhebel (4) Spannmittel aufweist oder mit Spannmitteln verbunden ist, derart, dass das Führungsteil (1) und das Teleskopteil (3) in der ersten Schwenkstellung des Bedienhebels (4) miteinander verspannt sind und die Verspannung in der zweiten Schwenkstellung des Bedienhebels (4) aufgehoben ist.

2. Teleskopeinrichtung nach Anspruch 1, **dadurch gekennzeichnet, dass** der Bedienhebel (4) in der ersten Schwenkstellung gegen das Führungsteil (1) und in der zweiten Schwenkstellung vom Führungsteil (1) weg geschwenkt ist.

3. Teleskopeinrichtung nach Anspruch 2, **dadurch gekennzeichnet, dass** der Bedienhebel (4) in der ersten Schwenkstellung den Verriegelungsbolzen (7) überdeckt.

4. Teleskopeinrichtung nach einem der Ansprüche 1 bis 3, **dadurch gekennzeichnet, dass** die Schwenkachse (10) des Bedienhebels (4) parallel zur Längsrichtung (2) des Führungsteils (1) und des Teleskopteils (3) oder quer zu dieser verläuft.

5. Teleskopeinrichtung nach einem der Ansprüche 1 bis 4, **dadurch gekennzeichnet, dass** am Bedienhebel (4) eine in Richtung quer zur Schwenkachse (10) vorstehende Betätigungspartie (13) angeordnet ist, in deren Schwenkweg mit dem Verriegelungsbolzen (7) zumindest in Entriegelungsrichtung (9) in Mitnahmeverbindung stehende Mitnahmemittel (14) angeordnet sind, wobei die Betätigungspartie (13) beim Verschwenken des Bedienhebels (4) von der ersten Schwenkstellung zur zweiten Schwenkstellung hin in der Zwischenstellung an den Mitnahmemitteln (14) zur Anlage gelangt.

6. Teleskopeinrichtung nach Anspruch 5, **dadurch gekennzeichnet, dass** die Mitnahmemittel (14) von der Federeinrichtung (8) gebildet werden, die mit dem Verriegelungsbolzen (7) verbunden ist und eine im Schwenkweg der Betätigungspartie (13) des Bedienhebels (4) angeordnete Mitnahmepartie (15) aufweist.

7. Teleskopeinrichtung nach Anspruch 6, **dadurch gekennzeichnet, dass** die Betätigungspartie (13) von einem am Bedienhebel (4) ausgebildeten Absatz gebildet wird.

8. Teleskopeinrichtung nach Anspruch 6 oder 7, **dadurch gekennzeichnet, dass** die Federeinrichtung (8) einerseits mit dem Führungsteil (1) und andererseits mit dem Verriegelungsbolzen (7) verbunden ist, wobei die Mitnahmepartie (15) entweder zwischen diesen beiden Verbindungsstellen (18, 19) oder, ausgehend von der Verbindungsstelle (18) am Führungsteil (1), jenseits des Verbindungsbolzens (7) angeordnet ist.

9. Teleskopeinrichtung nach einem der Ansprüche 6 bis 8, **dadurch gekennzeichnet, dass** die Federeinrichtung (8) von einer Bügelfeder (20) mit U- oder V-ähnlicher Gestalt gebildet wird.

10. Teleskopeinrichtung nach einem der Ansprüche 6 bis 9, **dadurch gekennzeichnet, dass** die Federeinrichtung (8) von einer Schenkelfeder (21) aus Drahtmaterial mit schraubenartig gewickeltem, von der Schwenkachse (10) des Bedienhebels (4) durchgriffenem Federkern (22) gebildet wird.

11. Teleskopeinrichtung nach Anspruch 9 oder 10, **dadurch gekennzeichnet, dass** die Bügelfeder (20) oder die Schenkelfeder (21) im Bereich des Verriegelungsbolzens (7) am Führungsteil (1) festgelegt ist.

12. Teleskopeinrichtung nach einem der Ansprüche 5 bis 11, **dadurch gekennzeichnet, dass** die Mitnahmemittel (14) am Verriegelungsbolzen (7) angeordnet sind.

13. Teleskopeinrichtung nach einem der Ansprüche 1 bis 12, **dadurch gekennzeichnet, dass** am Bedienhebel (4) eine zur Schwenkachse (10) exzentrische Kurvenfläche (25) vorhanden ist, die eine in der ersten Schwenkstellung das Führungsteil (1) und das Teleskopteil (3) miteinander verspannende Spannfläche (26) bildet.

14. Teleskopeinrichtung nach einem der Ansprüche 1 bis 12, **dadurch gekennzeichnet, dass** am Bedienhebel (4) ein auf der Schwenkachse (10) gelagertes Nockenelement (27) angeordnet ist und dass ein Spannband (28) umlaufend um das Führungsteil (1) und das Nockenelement (27) geführt ist.

15. Teleskopeinrichtung nach einem der Ansprüche 1 bis 12, **dadurch gekennzeichnet, dass** am Bedienhebel (4) ein Spannband (28) exzentrisch zur Schwenkachse (10) befestigt ist, das das Führungsteil (1) mindestens zum Teil umschließt und mit seinem dem Bedienhebel (4) entgegengesetzten Ende am Führungsteil (1) befestigt ist.

16. Teleskopeinrichtung nach einem der Ansprüche 1 bis 12, **dadurch gekennzeichnet, dass** der Bedienhebel (4) zwei beiderseits von ihm abstehende, koaxial zur Schwenkachse (10) angeordnete, drehfest mit ihm verbundene Gewindebolzen (31, 32) mit gegensinnigen Gewinden (33, 34) aufweist, die jeweils mit einem Gewinde-Endstück (35, 36) eines das Führungsteil (1) umschließenden Spannbandes (28) in Gewindeeingriff stehen.

17. Teleskopeinrichtung nach einem der Ansprüche 13 bis 16, **dadurch gekennzeichnet, dass** die Spannfläche (26) bzw. das Spannband (28) gegen mindestens ein am Führungsteil (1) in Richtung zum Teleskopteil (3) hin bewegbar gelagertes Druckstück (39) wirkt.

18. Teleskopeinrichtung nach einem der Ansprüche 14 bis 17, **dadurch gekennzeichnet, dass** das Führungsteil (1) im Bereich des Spannbandes (28) Längsschlitze (37) aufweist.

19. Teleskopeinrichtung nach einem der Ansprüche 1 bis 18, **dadurch gekennzeichnet, dass** das Führungsteil (1) innen mindestens im Bereich des Bedienhebels (4) ein seine Innenseite bildendes Innenelement (5) aus Kunststoff aufweist.

## Claims

1. Telescoping device, in particular for the production of furniture including chairs, with an outer guide part and a telescoping part located in the outer guide part for adjustment in the longitudinal direction, wherein the telescoping part features a row of locking means extending in the longitudinal direction, to which is assigned a locking pin located on the guide part and loaded by a spring device, which is movable against the force of the spring device in the unlocking direction from a locked position engaging one of the locking means to an unlocked position releasing the telescoping part, **characterised in that** an operating lever (4) for moving the locking pin (7) from the locked to the unlocked position is mounted on the guide part (1) for pivoting between a first pivoting position and a second pivoting position, which, in the first pivoting position and when pivoting between the first pivoting position and an intermediate position, is inoperative with regard to the locking pin (7) and, when pivoting between the intermediate position and the second pivoting position, is operative with regard to the locking pin (7), and **in that** the operating lever (4) is provided with or connected to clamping means, so that the guide part (1) and the telescoping part (3) are clamped to one another in the first pivoting position of the operating lever (4) and the clamping action is cancelled in the second pivoting position of the operating lever (4).

2. Telescoping device according to claim 1, **characterised in that** the operating lever (4) is pivoted towards the guide part (1) in the first pivoting position and away from the guide part (1) in the second pivoting position.

3. Telescoping device according to claim 2, **characterised in that** the operating lever (4) covers the locking pin (7) in the first pivoting position.

4. Telescoping device according to any of claims 1 to 3, **characterised in that** the pivot axis (10) of the operating lever (4) runs parallel or at right angles to the longitudinal direction (2) of the guide part (1) and the telescoping part (3).

5. Telescoping device according to any of claims 1 to 4, **characterised in that** an operating section (13) projecting at right angles to the pivot axis (10) is provided on the operating lever (4), in the pivoting path of which are located driving means (14) in driving connection with the locking pin (7) at least in the unlocking direction (9), the operating section (13) coming into contact with the driving means (14) in the intermediate position as the operating lever (4) is pivoted from the first pivoting position to the second pivoting position.

6. Telescoping device according to claim 5, **characterised in that** the driving means (14) are represented by the spring device (8), which is connected to the locking pin (7) and has a driving section (15) located in the pivoting path of the operating section (13) of the operating lever (4).

7. Telescoping device according to claim 6, **characterised in that** the operating section (13) is represented by a shoulder on the operating lever (4).

8. Telescoping device according to claim 6 or 7, **characterised in that** the spring device (8) is connected to the guide part (1) at one end and to the locking bolt (7) at the other end, the driving section (15) being located either between the two connecting points (18, 19) or, starting from the connecting point (18), on the guide part (1) beyond the locking pin (7).

9. Telescoping device according to any of claims 6 to 8, **characterised in that** the spring device (8) is represented by a U- or V-shaped bow spring (20).

10. Telescoping device according to any of claims 6 to 9, **characterised in that** the spring device (8) is represented by a leg spring (21) made of a wire material with a helically wound spring core (22) surrounding the pivot axis (10) of the operating lever (4).

11. Telescoping device according to claim 9 or 10, **characterised in that** the bow spring (20) or the leg spring (21) is attached to the guide part (1) in the area of the locking pin (7).

12. Telescoping device according to any of claims 5 to 11, **characterised in that** the driving means (14) are located on the locking pin (7).

13. Telescoping device according to any of claims 1 to 12, **characterised in that** a cam surface (25) eccentric relative to the pivot axis (10) is provided on the operating lever (4), which forms a clamping surface (26) clamping the guide part (1) and the telescoping part (3) to one another in the first pivoting position.

14. Telescoping device according to any of claims 1 to 12, **characterised in that** a cam element (27) mounted on the pivot axis (10) is provided on the operating lever (4), and **in that** a continuous retaining strap (28) is guided around the guide part (1) and the cam element (27).

15. Telescoping device according to any of claims 1 to 12, **characterised in that** a retaining strap (28) eccentric relative to the pivot axis (10) is attached to the operating lever (4), which at least partially encloses the guide part (1), the end opposite the operating lever (4) being attached to the guide part (1).

16. Telescoping device according to any of claims 1 to 12, **characterised in that** the operating lever is provided with two stud bolts (31, 32) with opposite threads (33, 34) projecting on both sides therefrom and arranged coaxial with the pivot axis (10), each of which is in threaded engagement with a threaded end section (35, 36) of a retaining strap (28) enclosing the guide part (1).

17. Telescoping device according to any of claims 13 to 16, **characterised in that** the clamping surface (26) or the retaining strap (28) respectively acts against at least one pad (39) mounted on the guide part (1) and capable of movement towards the telescoping part (3).

18. Telescoping device according to any of claims 14 to 17, **characterised in that** the guide part (1) has longitudinal slots (37) in the area of the retaining strap (28).

19. Telescoping device according to any of claims 1 to 18, **characterised in that** the guide part (1) features an inner element (5) made of plastic and representing its inside at least in the area of the operating lever (4).

## Revendications

1. Dispositif télescopique, en particulier pour la construction des meubles, y compris les chaises, avec une partie de guidage extérieure et une partie télescopique disposée dans la partie de guidage extérieure de façon coulissante dans la direction longitudinale, la partie télescopique présentant une série de moyens de verrouillage agencée dans la direction longitudinale, à laquelle est attribué un boulon de verrouillage disposé sur la partie de guidage et chargé par un dispositif à ressort, qui peut se déplacer dans le sens contraire à la force du dispositif à ressort dans la direction de déverrouillage à partir d'une position de verrouillage s'engageant dans l'un des moyens de verrouillage dans une position de déverrouillage libérant la partie télescopique, **caractérisé en ce que**, sur la partie de guidage (1), un levier de commande (4) est logé de façon basculante pour déplacer le boulon de verrouillage (7) à partir de la position de verrouillage dans la position de déverrouillage entre une première position de basculement et une seconde position de basculement, qui devient inefficace par rapport au boulon de verrouillage (7) dans la première position de basculement et lors du basculement entre la première position de basculement et une position intermédiaire et est efficace par rapport au boulon de verrouillage (7) lors du basculement entre la position intermédiaire et la seconde position de basculement, et **en ce que** le levier de commande (4) présente des moyens de serrage ou est relié à des moyens de serrage de telle sorte que la partie de guidage (1) et la partie télescopique (3) sont tendues entre elles dans la première position de basculement du levier de commande (4) et le serrage dans la première position de basculement du levier de commande (4) est supprimé.

2. Dispositif télescopique selon la revendication 1, **caractérisé en ce que** le levier de commande (4) est basculé dans la première position de basculement vers la partie de guidage (1) et dans la seconde position de basculement à partir de la partie de guidage (1).

3. Dispositif télescopique selon la revendication 2, **caractérisé en ce que** le levier de commande (4) recouvre le boulon de verrouillage (7) dans la première position de basculement.

4. Dispositif télescopique selon l'une quelconque des revendications 1 à 3, **caractérisé en ce que** l'axe de basculement (10) du levier de commande (4) est agencé parallèlement à la direction longitudinale (2) de la partie de guidage (1) et de la partie télescopique (3) ou transversalement à celle-ci.

5. Dispositif télescopique selon l'une quelconque des revendications 1 à 4, **caractérisé en ce que** sur le levier de commande (4) est disposée une partie d'actionnement (13) dépassant dans la direction transversale à l'axe de basculement (10), partie dans le trajet de basculement de laquelle sont disposés des moyens d'entraînement (14) en liaison d'entraînement avec le boulon de verrouillage (7) au moins dans le sens de déverrouillage (9), la partie d'actionnement (13) venant en appui sur les moyens d'entraînement (14) lors du basculement du levier de commande (4) de la première position de basculement à la seconde position de basculement dans la position intermédiaire.

6. Dispositif télescopique selon la revendication 5, **caractérisé en ce que** les moyens d'entraînement (14) sont formés par le dispositif à ressort (8), qui est relié au boulon de verrouillage (7) et présente une partie d'entraînement (15) disposée dans le trajet de basculement de la partie d'actionnement (13) du levier de commande (4).

7. Dispositif télescopique selon la revendication 6, **caractérisé en ce que** la partie d'actionnement (13) est formé par un décrochement réalisé sur le levier de commande (4).

8. Dispositif télescopique selon la revendication 6 ou 7, **caractérisé en ce que** le dispositif à ressort (8) est relié d'une part à la partie de guidage (1) et d'autre part au boulon de verrouillage (7), la partie d'entraînement (15) étant disposée, soit entre ces deux parties de liaison (18, 19), soit à partir du point de liaison (18) sur la partie de guidage (1), au-delà du boulon de verrouillage (7).

9. Dispositif télescopique selon l'une quelconque des revendications 6 à 8, **caractérisé en ce que** le dispositif à ressort (8) est formé par un ressort à bride (20) avec une forme de U ou de V.

10. Dispositif télescopique selon l'une quelconque des revendications 6 à 9, **caractérisé en ce que** le dispositif à ressort (8) est formé par un ressort à branches (21) en matériau de fil avec noyau de ressort (22) enroulé à la façon d'une vis et traversé par l'axe de pivotement (10) du levier de commande (4).

11. Dispositif télescopique selon la revendication 9 ou 10, **caractérisé en ce que** le ressort à bride (20) ou le ressort à branches (21) est fixé dans la zone du boulon de verrouillage (7) sur la partie de guidage (1).

12. Dispositif télescopique selon l'une quelconque des revendications 5 à 11, **caractérisé en ce que** les moyens d'entraînement (14) sont disposés sur le boulon de verrouillage (7).

13. Dispositif télescopique selon l'une quelconque des revendications 1 à 12, **caractérisé en ce que**, sur le levier de commande (4), une surface de came (25) excentrée par rapport à l'axe de pivotement (10) est présente, laquelle forme une surface de serrage (26) serrant ensemble la partie de guidage (1) et la partie télescopique (3) dans la première position de basculement.

14. Dispositif télescopique selon l'une quelconque des revendications 1 à 12, **caractérisé en ce qu'**un élément de came (27) logé sur l'axe de pivotement (10) est disposé sur le levier de commande (4) et **en ce qu'**une bande de serrage (28) est guidée de façon rotative autour de la partie de guidage (1) et de l'élément de came (27).

15. Dispositif télescopique selon l'une quelconque des revendications 1 à 12, **caractérisé en ce qu'**une bande de serrage (28) est fixée sur le levier de commande (4) de façon excentrée par rapport à l'axe de pivotement (10), laquelle bande entoure au moins partiellement la partie de guidage (1) et est fixée par son extrémité, opposée au levier de commande (4), sur la partie de guidage (1).

16. Dispositif télescopique selon l'une quelconque des revendications 1 à 12, **caractérisé en ce que** le levier de commande (4) présente deux boulons filetés (31, 32) débordant des deux côtés du levier, disposés sur le même axe que l'axe de pivotement (10), reliés de façon solidaire en rotation au levier, avec des filetages (33, 34) de sens contraire, qui sont en prise de filetage respectivement avec une pièce d'extrémité de filetage (35, 36) d'une bande de serrage (28) entourant la partie de guidage (1).

17. Dispositif télescopique selon l'une quelconque des revendications 13 à 16, **caractérisé en ce que** la surface de serrage (26) ou la bande de serrage (28) agit contre au moins une pièce de pression (39) logée sur la partie de guidage (1) de façon mobile en direction de la partie télescopique (3).

18. Dispositif télescopique selon l'une quelconque des revendications 14 à 17, **caractérisé en ce que** la partie de guidage (1) présente des fentes longitudinales (37) dans la zone de la bande de serrage (28).

19. Dispositif télescopique selon l'une quelconque des revendications 1 à 18, **caractérisé en ce que** la partie de guidage (1) présente à l'intérieur au moins dans la zone du levier de commande (4) un élément intérieur (5), formant son côté intérieur, en matière synthétique.
